# EUROPEAN PATENT APPLICATION

(11) **EP 4 497 592 A1**
(43) Date of publication of application: **29.01.2025**
(21) Application number: 23775032.8
(22) Date of filing: 23.03.2023
(51) Int. Cl.: B32B 27/00

(54) **PRODUCTION METHOD FOR DECORATIVE SHEET, AND DECORATIVE SHEET**

(30) Priority: 23.03.2022 JP 2022047419
(71) Applicant: Toppan Holdings Inc., Tokyo 110-0016 (JP)
(72) Inventor: AKASHI, Aya, Tokyo 110-0016 (JP); KINOSHITA, Kazuki, Tokyo 110-0016 (JP); NOGUCHI, Shota, Tokyo 110-0016 (JP); KUWAMURA, Kensuke, Tokyo 110-0016 (JP)
(74) Representative: Hoffmann Eitle
(86) International application number: PCT/JP2023/011562
(87) International publication number: WO 2023/182438

(57) **Abstract**

There is provided a production method for a decorative sheet having a texture that is closer to that of a genuine article and having excellent design properties. To do so, the method includes forming a pictorial pattern layer (5) on which a pictorial pattern is drawn using a predetermined material having higher light absorption properties with respect to infrared light than a transparent thermoplastic resin layer (6) (FIG. 2A), depositing the transparent thermoplastic resin layer (6) and a surface protective layer (7) on the pictorial pattern layer (5) in this order (FIG. 2B), performing irradiation with infrared light after the depositing (FIG. 2C), and pressing an embossing plate onto the surface protective layer (7) after performing the irradiation with infrared light.

## Description

### Technical Field

The present invention relates to a production method for a decorative sheet and a decorative sheet.

### Background Art

Decorative sheets have been developed and expanded in the process of the expansion of residential construction as an industry. Originally, materials suited to the characteristics of the region, such as wood and stone, were used for housing, but, as the housing industry expanded and industrialization progressed, natural materials were replaced by artificial materials. In addition, in recent years, the extensive use of high-quality wood and stone materials, which raises concerns about deforestation and environmental issues, has been a factor behind the increasing demand for decorative sheets. For example, decorative materials in which decorative sheets are bonded to wooden base plates such as plywood, medium density fiberboard (MDF), and particle board, resin base plates, inorganic non-combustible base plates, metal base plates, and the like are widely used (for example, refer to PTL 1).

In addition, the designs of decorative sheets often imitate the surfaces of wood, stone, and the like.

### Citation List

### Patent Literature

PTL 1: JP 5045180 B

### Summary of Invention

### Technical Problem

Decorative sheets tend to have flat surface textures compared to genuine wood, stone, and the like. Real wood and stone have differences in unevenness and differences in texture in places due to differences in the surface material, structure, and the like. Colors also often differ in portions having different textures, but this expression is not found in decorative sheets and the expensive genuine articles are far superior in terms of design.

The present invention was created in consideration of the above points and has an object of providing a decorative sheet that has a texture that is closer to that of a genuine article and has excellent design properties, and a production method for the decorative sheet.

### Solution to Problem

To solve the above problem, one aspect of the present invention provides a production method for a decorative sheet including an base material layer, a pictorial pattern layer, a transparent resin layer, and a surface protective layer, and having an embossed shape synchronizing with a pictorial pattern of the pictorial pattern layer, the production method including forming the pictorial pattern layer on which the pictorial pattern is drawn using a predetermined material having higher light absorption properties with respect to light of a predetermined wavelength than the transparent resin layer, depositing the transparent resin layer and the surface protective layer on the pictorial pattern layer in this order, performing irradiation with irradiation light for which a power of the light of a predetermined wavelength is higher than a power of light of other wavelengths after the depositing, and pressing the embossing plate for forming an embossed shape onto the surface protective layer after performing the irradiation with irradiation light.

In addition, another aspect of the present invention provides a production method for a decorative sheet having an embossed shape synchronizing with a pictorial pattern, the production method including depositing a pictorial pattern layer, a transparent resin layer, and a surface protective layer in this order on one surface of a colored resin layer, forming, on the other surface of the colored resin layer, a pattern layer synchronizing with the pictorial pattern using a predetermined material having higher light absorption properties with respect to light of a predetermined wavelength than the colored resin layer, performing irradiation with irradiation light for which a power of the light of a predetermined wavelength is higher than a power of light of other wavelengths after the depositing and the pattern layer forming, and pressing the embossing plate for forming an embossed shape onto the surface protective layer after performing the irradiation with irradiation light.

In addition, still another aspect of the present invention provides a decorative sheet including an base material layer, a pictorial pattern layer, a transparent resin layer, and a surface protective layer, in which the pictorial pattern layer has a pictorial pattern formed by using a predetermined material having higher light absorption properties with respect to light of a predetermined wavelength than the transparent resin layer, the transparent resin layer and the surface protective layer are deposited on the pictorial pattern layer in this order, and an embossed part is formed at a position on the surface protective layer that overlaps a portion formed of the predetermined material in a plan view.

Furthermore, yet still another aspect of the present invention provides a decorative sheet including a pictorial pattern layer, in which the pictorial pattern layer, a transparent resin layer, and a surface protective layer are deposited on one surface of a colored resin layer in this order, a pattern layer, in which a predetermined material having higher light absorption properties with respect to light of a predetermined wavelength than the colored resin layer is arranged to synchronize with a pictorial pattern of the pictorial pattern layer, is deposited on the other surface of the colored resin layer, and an embossed part is formed at a position on the surface protective layer that overlaps a portion formed of the predetermined material in a plan view.

### Advantageous Effects of Invention

According to one aspect of the present invention, it is possible to provide a decorative sheet that has a texture that is closer to the surface texture of wood, stone, and the like used in building materials, and has excellent design properties.

### Brief Description of Drawings

FIG. 1 is a cross-sectional view schematically illustrating an example of a decorative sheet created by the production method for a decorative sheet according to a first embodiment of the present invention;
FIGS. 2A to 2E are process diagrams schematically illustrating an example of the production procedure for the decorative sheet according to the first embodiment;
FIG. 3 is a cross-sectional view schematically illustrating another example of a decorative sheet created by the production method for a decorative sheet according to a second embodiment of the present invention;
FIGS. 4A to 4G are process diagrams schematically illustrating an example of the production procedure for the decorative sheet according to the second embodiment;
FIG. 5 is a cross-sectional view schematically illustrating another example of a decorative sheet created by the production method for a decorative sheet according to a third embodiment of the present invention; and
FIGS. 6A to 6E are process diagrams schematically illustrating an example of the production procedure for the decorative sheet according to the third embodiment.

### Description of Embodiments

A description will be given below of embodiments of the present technology with reference to the drawings. In the present embodiment, decorative sheets and decorative materials for floors or building fixtures will be described as examples, but the decorative sheets may be for use in other locations.

Here, the drawings are schematic, and the relationship between thickness and planar dimensions, the thickness ratio of each layer, and the like, differ from reality. In addition, the embodiments illustrated below are examples of configurations for embodying the technical concept of the present invention and the technical concept of the present invention is not limited to the materials, shapes, structures, or the like of the constituent components as specified below. It is possible for the technical concept of the present invention to be modified in various ways within the technical scope set forth in the claims as disclosed in the scope of the claims.

A production method for a decorative sheet according to one embodiment of the present invention is a production method for a decorative sheet including an base material layer, a pictorial pattern layer, a transparent resin layer, and a surface protective layer, and having an embossed shape synchronizing with a pictorial pattern of the pictorial pattern layer, the production method including forming the pictorial pattern layer on which the pictorial pattern is drawn using a predetermined material having higher light absorption properties with respect to light of a predetermined wavelength than the transparent resin layer, depositing the transparent resin layer and the surface protective layer on the pictorial pattern layer in this order, performing irradiation with irradiation light for which a power of the light of a predetermined wavelength is higher than a power of light of other wavelengths after the depositing, and pressing an embossing plate for forming the embossed shape onto the surface protective layer after performing the irradiation with irradiation light.

In addition, a production method for a decorative sheet according to another embodiment of the present invention is a production method for a decorative sheet having an embossed shape synchronizing with a pictorial pattern, the production method including depositing a pictorial pattern layer, a transparent resin layer, and a surface protective layer in this order on one surface of a colored resin layer, forming, on the other surface of the colored resin layer, a pattern layer synchronizing with the pictorial pattern using a predetermined material having higher light absorption properties with respect to light of a predetermined wavelength than the colored resin layer, performing irradiation with irradiation light for which a power of the light of a predetermined wavelength is higher than a power of light of other wavelengths after the depositing and the pattern layer forming, and pressing an embossing plate for forming the embossed shape onto the surface protective layer after performing the irradiation with irradiation light.

In addition, a decorative sheet according to still another embodiment of the present invention is a decorative sheet including an base material layer, a pictorial pattern layer, a transparent resin layer, and a surface protective layer, in which the pictorial pattern layer has a pictorial pattern formed by using a predetermined material having higher light absorption properties with respect to light of a predetermined wavelength than the transparent resin layer, the transparent resin layer and the surface protective layer are deposited on the pictorial pattern layer in this order, and an embossed part is formed at a position on the surface protective layer that overlaps a portion formed of the predetermined material in a plan view.

Furthermore, a decorative sheet according to yet still another embodiment of the present invention is a decorative sheet including a pictorial pattern layer, in which the pictorial pattern layer, a transparent resin layer, and a surface protective layer are deposited on one surface of a colored resin layer in this order, a pattern layer, in which a predetermined material having higher light absorption properties with respect to light of a predetermined wavelength than the colored resin layer is arranged to synchronize with a pictorial pattern of the pictorial pattern layer, is deposited on the other surface of the colored resin layer, and an embossed part is formed at a position on the surface protective layer that overlaps a portion formed of the predetermined material in a plan view.

### [First embodiment]

First, a description will be given of the first embodiment of the present invention.

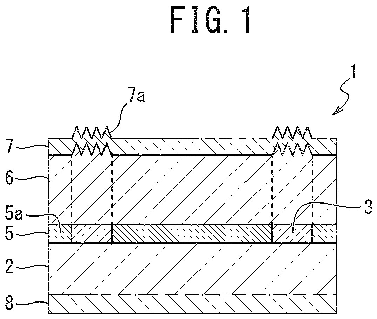

As illustrated in FIG. 1, a decorative sheet 1 formed by the production method for a decorative sheet according to the first embodiment of the present invention is formed by depositing a colored thermoplastic resin layer (base material layer) 2, a pictorial pattern layer 5 including a gloss matte-expressing pattern part 3, a transparent thermoplastic resin layer (transparent resin layer) 6, and a surface protective layer 7 in this order, and an embossed part (embossed shape) 7a is formed in the transparent thermoplastic resin layer 6 and the surface protective layer 7. The gloss matte-expressing pattern part 3 is arranged in a position in the pictorial pattern layer 5 to synchronize with the embossed part 7a. "Synchronize with" means that at least a part of the gloss matte-expressing pattern part 3 and the embossed part 7a overlap in a plan view.

FIG. 1 also illustrates a case where a primer layer 8 is provided on the surface of the colored thermoplastic resin layer 2 opposite the surface on which the pictorial pattern layer 5 is formed.

### [Colored thermoplastic resin layer (Base material layer)]

Examples of the colored thermoplastic resin layer 2 as the base material include polyvinyl chloride, polyethylene terephthalate, polybutylene terephthalate, polyamide, polyethylene, polypropylene, polycarbonate, polyethylene naphthalate, ethylene-vinyl acetate copolymers, ethylene-acrylic acid copolymers, ethylene-acrylic acid ester copolymers, ionomers, acrylic acid esters, methacrylic acid esters, and the like. Among the above, it is possible to preferably use polyolefin-based resins in terms of environmental compatibility, processability, and price. It is also possible to select the grade and composition of the resin in consideration of ease of sheeting, printability, and suitability for bending processing.

As the colored thermoplastic resin layer 2, it is possible to appropriately select the hue as the base color of the pictorial pattern layer 5. It is possible to color the colored thermoplastic resin layer 2, for example, by mixing or kneading in a coloring agent such as a pigment when sheeting the thermoplastic resin, or the like. Alternatively, it is also possible to carry out the coloring by providing a colored layer using a coating or printing technique as a solid ink layer before providing the gloss matte-expressing pattern part 3. Although a colored thermoplastic resin is used as the base material layer, the base material layer does not have to be colored and may be colorless and transparent.

### [Gloss matte-expressing pattern part]

The gloss matte-expressing pattern part 3 is formed of a material having light absorption properties with respect to light of a predetermined wavelength, for example, formed of a material that has an infrared light-absorbing action. In addition, the gloss matte-expressing pattern part 3 is formed of a material that includes a carbon black-including black ink, for example, formed of a urethane-based printing ink. The gloss matte-expressing pattern part 3 is provided as a part of the pictorial pattern layer 5 and is formed at a position to synchronize with the embossed part 7a, in other words, the position where the embossed part 7a is to be formed. For example, in the case of the pictorial pattern layer 5 having a wood grain design, the gloss matte-expressing pattern part 3 is arranged at a position that overlaps wood grain board grooves of the pictorial pattern layer 5.

### [Pictorial pattern layer]

The pictorial pattern layer 5 is a printed layer on which a pictorial pattern design is printed to impart design properties to the decorative sheet 1. As the method for forming the pictorial pattern layer 5, it is possible to adopt a known printing technique. The printing technique is not particularly limited, but a gravure printing method is preferable in consideration of productivity and pictorial pattern quality. In addition, for example, when it is possible to prepare the colored thermoplastic resin layer 2 in a rolled state, it is possible to perform the printing for forming the pictorial pattern layer 5 using a roll-to-roll printing apparatus. Other than the above, examples of printing techniques include offset printing methods, screen printing methods, flexographic printing methods, electrostatic printing methods, ink jet printing methods, transfer printing methods from a transfer sheet, and the like. When using such a printing technique, it is possible to form the pictorial pattern design of the pictorial pattern layer 5 by multi-color printing using normal process colors of yellow, red, blue, and black, or by multi-color printing using special colors by preparing plates of each color forming the pictorial pattern design, or the like.

In addition, any pictorial pattern design may be adopted as the pictorial pattern design of the pictorial pattern layer 5 in consideration of the design properties as a flooring material or building fixture. For example, it is also possible to create an image of a floor made of stone, such as marble, and use the stone grain of marble or the like as the pictorial pattern design. In addition, for example, in the case of wood-type pictorial patterns, it is also possible to use various wood grains and cork as the pictorial pattern design. In addition, for example, in addition to pictorial pattern designs of natural materials, it is also possible to use artificial pictorial pattern designs based on these motifs or artificial pictorial pattern designs such as geometric designs. Other than the above, examples of pictorial pattern designs include wood grain designs taken from spring wood regions, autumn wood regions, vessel parts, and the like of cross-sections of annual rings, leather (leather grain) designs, stone grain designs on the surface of stones such as marble, granite, and sandstone, sand grain designs, tile designs, brickwork designs, fabric designs, geometric figures, letters, symbols, abstract designs, floral designs, landscapes, characters, and the like.

The pictorial pattern layer 5 has the gloss matte-expressing pattern part 3 formed of a material including a black ink, and a non-gloss matte-expressing pattern part 5a, and the gloss matte-expressing pattern part 3 and the non-gloss matte-expressing pattern part 5a form a single layer that forms a single pictorial pattern. The gloss matte-expressing pattern part 3 is arranged at a position in the pictorial pattern of the pictorial pattern layer 5 to synchronize with the embossed part 7a.

The printing ink for the non-gloss matte-expressing pattern part 5a is a mixture of a solvent and solids such as a coloring agent and a binder resin.

Examples of solvents include petroleum-based organic solvents such as hexane, heptane, octane, toluene, xylene, ethylbenzene, cyclohexane, and methylcyclohexane; ester-based organic solvents such as ethyl acetate, butyl acetate, 2-methoxyethyl acetate, and 2-ethoxyethyl acetate; alcohol-based organic solvents such as methyl alcohol, ethyl alcohol, normal propyl alcohol, isopropyl alcohol, isobutyl alcohol, ethylene glycol, and propylene glycol; ketone-based organic solvents such as acetone, methyl ethyl ketone, methyl isobutyl ketone, and cyclohexanone; ether-based organic solvents such as diethyl ether, dioxane, and tetrahydrofuran; chlorine-based organic solvents such as dichloromethane, carbon tetrachloride, trichloroethylene, and tetrachloroethylene; inorganic solvents such as water, and the like. The solvent may be used alone or in a combination of two or more.

In addition, examples of the binder resin include a chlorine-based resin, a urethane resin, an acrylic urethane resin, an acrylic resin, a polyester resin, a polyamide resin, a butyral resin, a polystyrene resin, a nitrocellulose resin (nitrocellulose), a cellulose acetate resin, or the like. Examples of chlorine-based resins include polyvinyl chloride-based resins such as polyvinyl chloride, chlorinated polyethylene, polyvinylidene chloride, ethylene-vinyl chloride copolymers, vinyl chloride-vinyl acetate copolymers, and vinyl chloride-vinyl acetate-(meth)acrylic copolymers, polypropylene chloride, chlorinated polypropylene, and the like. Here, (meth)acrylic means acrylic or methacrylic. The binder resin may be alone or a combination of two or more.

In addition, examples of coloring agents include inorganic pigments such as carbon black, iron black, titanium white (titanium oxide), antimony white, yellow lead, titanium yellow, red oxide, cadmium red, ultramarine blue, or cobalt blue; or organic pigments such as quinacridone red, isoindolinone yellow, or phthalocyanine blue. The coloring agent may be alone or a combination of two or more.

Here, the solvent included in the printing ink will eventually evaporate. Therefore, the non-gloss matte-expressing pattern part 5a is mainly formed by solids such as a coloring agent and a binder resin.

In addition, the printing ink for the non-gloss matte-expressing pattern part 5a may include, as other components, stabilizers, plasticizers, catalysts, hardeners, and the like. As the printing ink, any ink corresponding to the printing method may be adopted. In particular, the selection is preferably carried out in consideration of the adhesiveness to the colored thermoplastic resin layer 2, printability, and weather resistance as a flooring material or building fixture. It is possible to appropriately adjust the thickness of the pictorial pattern layer 5 in consideration of the decorative property demanded for the pictorial pattern layer 5, the three-dimensional moldability of the decorative sheet 1, and the like. The thickness of the pictorial pattern layer 5 is usually 1 um or more and 1 mm or less, preferably 2 um or more and 0.1 mm or less, and more preferably 2 um or more and 50 um or less.

With the object of improving the adhesion between the pictorial pattern layer 5 and the transparent thermoplastic resin layer 6, an adhesive layer (not illustrated) may be provided on the surface of the side of the pictorial pattern layer 5 that contacts the transparent thermoplastic resin layer 6. By strengthening the adhesion described above, it is possible to impart bending processability for following curved surfaces and right-angled surfaces to the decorative sheet 1. The resin used for the adhesive layer (not illustrated) is not particularly limited. For example, it is possible to adopt a two-component curing-type urethane-based resin. In addition, an adhesive resin may be adhered to the pictorial pattern layer 5 using a urethane-based adhesive. For example, it is possible to adopt a coating apparatus or a gravure printing apparatus for coating the resin used for the adhesive layer (not illustrated).

In addition, with the object of suitably imparting a design effect such as a feeling of depth or feeling of brightness to the decorative sheet 1, a glittering layer (not illustrated) may be provided between the pictorial pattern layer 5 and the transparent thermoplastic resin layer 6. The glittering layer (not illustrated) preferably includes a glittering pigment and a binder resin. Examples of glittering pigments include pearl pigments, metal pigments, and the like. In particular, pearl pigments are able to suppress decreases in the light transmittance of the glittering layer and thus do not impair the visibility of the pictorial pattern layer 5, which is preferable.

Pearl pigments are pigments capable of imparting a pearlescent luster. For example, the surface of base particles is coated with a metal oxide. As the base particles, scaly particles such as mica are preferable. Examples of metal oxides include oxides of metals such as titanium, iron, zirconium, silicon, aluminum, and cerium. The metal oxide may be alone or two or more. Specific examples include oxide-coated mica such as titanium mica, iron oxide-coated mica, iron oxide-coated titanium mica, Prussian blue-coated titanium mica, Prussian blue-iron oxide-coated titanium mica, chromium oxide-coated titanium mica, carmine-coated titanium mica, organic pigment-coated titanium mica, titanium oxide-coated mica, and titanium oxide-coated synthetic mica; oxide-coated glass powder such as titanium oxide-coated glass powder and iron oxide-coated glass powder; oxide-coated metal particles such as titanium oxide-coated aluminum powder; scale-like foil pieces such as basic lead carbonate, lead hydrogen arsenate, and bismuth oxide chloride; fish scale powder, shell pieces, pearl pieces, and the like.

In addition, examples of metal pigments include pigments formed of metals such as aluminum, brass, stainless steel, tin, zinc, copper, nickel, gold powder, and silver, alloys of these metals, and the like. Metal pigments may be used alone or in a combination of two or more.

From the viewpoint of imparting an excellent design effect, for example, the average particle size of the glittering pigment is preferably 40 um or less and more preferably 30 um or less when the glittering layer is formed using gravure printing. From the same viewpoint, the ratio of [average particle size of the glittering pigment/thickness of the glittering layer] is preferably 0.01 or more and 15 or less and more preferably 0.5 or more and 10 or less. In the present specification, the "average particle size" means a value able to be determined as the mass average value D50 in particle size distribution measurement using the laser light diffraction method.

In addition, examples of binder resins include thermoplastic resins, cured products of curable resin compositions, and the like and, from the viewpoint of durability, cured products of curable resin compositions are preferable. Examples of cured products of curable resin compositions include cured products of thermosetting resin compositions and cured products of ionizing radiation curable resin compositions. From the viewpoint of interlayer adhesiveness, cured products of thermosetting resin compositions are preferable.

Examples of thermosetting resin compositions used in the glittering layer include polyester resin compositions, epoxy resin compositions, polyurethane resin compositions, aminoalkyd resin compositions, melamine resin compositions, guanamine resin compositions, urea resin compositions, thermosetting acrylic resin compositions, and the like. Examples of these thermosetting resin compositions include monomers and/or prepolymers forming each resin, and hardeners or the like added as necessary. As the ionizing radiation curable resin composition used in the glittering layer, it is possible to use the same ionizing radiation curable resin composition as in the surface protective layer 7 described below.

The content of the glittering pigment in the glittering layer is preferably 10 parts by mass or more and 90 parts by mass or less with respect to 100 parts by mass of the binder resin and more preferably 50 parts by mass or more and 80 parts by mass or less. By setting the content of the glittering pigment to 10 parts by mass or more, it is possible to impart a sufficient glossiness, and by setting the content to 90 parts by mass or less, it is possible to suppress impairment of visibility of the pictorial pattern layer described below. From the same viewpoint, the thickness of the glittering layer is preferably 1 um or more and 30 um or less and more preferably 5 um or more and 20 um or less.

It is possible to form any pattern on the glittering layer depending on the design to be imparted. Examples include wood grain designs, leather designs, stone grain designs, sand grain designs, tile designs, brickwork designs, fabric designs, geometric figures, letters, symbols, abstract designs, floral designs, landscapes, characters, and the like. In addition, the above-described pattern preferably has shading to further enhance the design effect. Shading may be formed by the size of the dots or the thickness of the dots, but is preferably formed by the coarseness and fineness of the dots (in other words, the size of the dots is uniform and the shading is formed by the density of the dots).

It is possible to form the glittering layer by a general-purpose printing means such as gravure printing using a coating liquid including a glittering pigment and a binder resin. When the shading of the glittering layer is formed by the coarseness and fineness of the dots, the dots on a printing plate may be formed by a frequency modulation (FM) screen.

### [Transparent thermoplastic resin layer]

The transparent thermoplastic resin layer 6 is a resin layer for creating thickness and depth for design purposes, protecting the pictorial pattern layer 5 and imparting good surface properties to improve the weather resistance and abrasion resistance of the decorative sheet 1. As the material of the transparent thermoplastic resin layer 6, for example, it is possible to use vinyl chloride resins, acrylic resins, or polyolefin-based resins (polypropylene resins or polyethylene resins). In particular, polyolefin-based resins are preferable in consideration of environmental compatibility, processability, and price. In addition, it is possible to select the grade and composition of the resin in consideration of ease of sheeting, printability, and suitability for bending processing, in addition to environmental compatibility, processability, and price. As for suitability for bending processing, it is important to carry out the selection in consideration of avoiding the occurrence of whitening or cracking at the bent portion.

As the method for forming the transparent thermoplastic resin layer 6, it is possible to adopt a lamination technique. In addition, for example, when the transparent thermoplastic resin layer 6 and the adhesive layer (not illustrated) are formed at the same time, it is possible to adopt a method for forming both by extrusion at the same time by co-extrusion.

### [Surface protective layer]

The surface protective layer 7 is a layer for imparting surface properties such as abrasion resistance to the decorative sheet 1. In addition, the surface protective layer 7 is also a layer for adjusting the surface luster of the decorative sheet 1. The surface protective layer 7 may be a single layer or may be multilayered. For example, as the surface protective layer 7, it is also possible to provide two layers, a first surface protective layer (not illustrated) and a second surface protective layer (not illustrated), in this order on the transparent thermoplastic resin layer 6. When providing the surface protective layer 7 formed of the first surface protective layer (not illustrated) and the second surface protective layer (not illustrated), each layer may be coated using a known coating apparatus, heat drying apparatus, or ionizing radiation irradiation apparatus depending on the type of curable resin, and the coating films may be cured.

A curable resin is used as the main component of the surface protective layer 7. That is, the resin component of the surface protective layer 7 is preferably substantially formed of a curable resin. Substantially means, for example, 80 parts by mass or more when the total resin is 100 parts by mass. The surface protective layer 7 may include weathering agents, plasticizers, stabilizers, fillers, dispersants, coloring agents such as dyes and pigments, solvents, and the like, as necessary.

As the material of the surface protective layer 7, for example, it is possible to adopt ionizing radiation curable resins and two-component curing-type urethane-based resins. The ionizing radiation curable resin is not particularly limited. For example, it is possible to adopt a transparent resin having, as a main component, a prepolymer (including oligomers) and/or a monomer including, in the molecule, a radically polymerizable double bond able to undergo a polymerization and cross-linking reaction upon irradiation with ionizing radiation such as infrared light, ultraviolet light, and electron beams. It is possible to use these prepolymers or monomers alone or in a mixture of a plurality of kinds. Specific examples of the prepolymers or monomers include compounds having radically polymerizable unsaturated groups such as (meth)acryloyl groups and (meth)acryloyloxy groups, cationic polymerizable functional groups such as epoxy groups, and the like, in the molecule.
In addition, polyene/thiol-based prepolymers obtained by combining polyenes and polythiols are also preferable. Here, (meth)acryloyl group means an acryloyl group or a methacryloyl group.

Examples of prepolymers having a radically polymerizable unsaturated group include polyester (meth)acrylate, urethane (meth)acrylate, epoxy (meth)acrylate, melamine (meth)acrylate, triazine (meth)acrylate, silicone (meth)acrylate, and the like. The molecular weight of the above is preferably approximately 250 to 100,000.

In addition, examples of monomers having a radically polymerizable unsaturated group include methyl (meth)acrylate, 2-ethylhexyl (meth)acrylate, and phenoxyethyl (meth)acrylate, and the like, as monofunctional monomers. In addition, examples of polyfunctional monomers include diethylene glycol di(meth)acrylate, propylene glycol di(meth)acrylate, trimethylpropane tri(meth)acrylate, trimethylolpropane ethylene oxide tri(meth)acrylate, dipentaerythritol tetra(meth)acrylate, dipentaerythritol penta(meth)acrylate, dipentaerythritol hexa(meth)acrylate, and the like.

In addition, examples of prepolymers having cationic polymerizable functional groups include prepolymers of epoxy-based resins such as bisphenol-type epoxy resins and novolac-type epoxy compounds, and vinyl ether-based resins such as fatty acid-based vinyl ethers and aromatic-based vinyl ethers.

In addition, examples of polyene-based prepolymers include prepolymers in which allyl alcohol is added to both ends of polyurethane using diols and diisocyanates. In addition, examples of thiol-based prepolymers include polythiols such as trimethylolpropane trithioglycolate and pentaerythritol tetrathioglycolate.

As the ionizing radiation, for example, it is possible to adopt electromagnetic waves or charged particles having energy capable of causing a curing reaction in molecules in the ionizing radiation curable resin (composition). Examples of curing reactions include a cross-linking curing reaction. In addition, as an ultraviolet light source, for example, it is possible to adopt a light source such as an ultra-high pressure mercury lamp, a high-pressure mercury lamp, a low-pressure mercury lamp, a carbon arc lamp, a black light, or a metal halide lamp. The wavelength of the ultraviolet light is preferably, for example, 190 nm or more and 380 nm or less. In addition, as an electron beam source, for example, it is possible to adopt an electron beam accelerator, which may be a Cockcroft-Walton type, a Van de Graff type, a resonant transformer type, an insulating core transformer type, a linear type, a Dynamitron type, a high frequency type, or the like. In particular, it is preferable to use an electron beam source able to irradiate electrons having an energy of 100 keV or more and 1000 keV or less (more preferably, electrons having an energy of 100 keV or more and 300 keV or less).

In addition, the two-component curing-type urethane-based resin is not particularly limited. For example, it is possible to adopt a two-component curing-type urethane-based resin including a polyol component having an OH group as a main agent and an isocyanate component as a hardener component. Examples of polyol components having an OH group include acrylic polyols, polyester polyols, polyether polyols, and epoxy polyols. In addition, examples of isocyanate components include tolylene diisocyanate, hexamethylene diisocyanate, and meta-xylene diisocyanate.

### [Light of predetermined wavelength]

As described above, the gloss matte-expressing pattern part 3 is formed of a material having light absorption properties with respect to light of a predetermined wavelength. Examples of this light of a predetermined wavelength include infrared light, ultraviolet light, visible light, electron beams, X-rays, ion beams, and the like.

### [Embossed part]

The embossed part 7a formed of an uneven design is formed on the surface of the surface protective layer 7 to impart given design properties. Examples of uneven designs include wood grain board grooves, stone slab surface unevenness (such as granite cleavage surfaces), fabric textures, satin finishes, sand grains, hairlines, and numerous linear grooves. The embossed part 7a is provided such that the uneven design synchronizes with the pictorial pattern of the pictorial pattern layer 5.

As the method for forming an uneven design, it is possible to adopt, for example, embossing processing. The embossing processing method is not particularly limited. For example, it is possible to adopt a known sheet-fed embossing machine or a rotary embossing machine.

### [Primer layer]

The primer layer 8 is a layer that acts as a base and that improves the adhesiveness and corrosion resistance between the colored thermoplastic resin layer 2 and the base material (not illustrated) to which the decorative sheet 1 is attached. The primer layer 8 is provided on the surface of the colored thermoplastic resin layer 2 on the opposite side to the gloss matte-expressing pattern part 3. The primer layer 8 is formed using, for example, a polyester-based resin, an organic additive, a pigment, and the like. The primer layer 8 may be blended with an anti-rust pigment with the object of improving corrosion resistance. The thickness of the primer layer 8 is, for example, in a range of 1 um or more and 10 um or less.

### [Production method for decorative sheet]

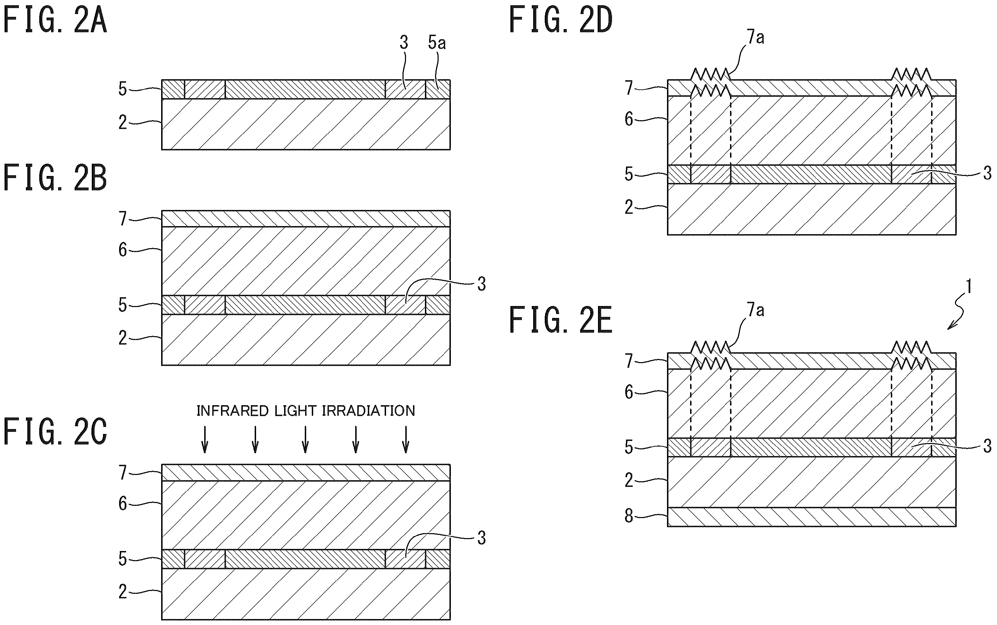

Next, a description will be given of an example of a production method for a decorative sheet according to the present embodiment with reference to FIGS. 2A to 2E.

First, the colored thermoplastic resin layer 2 is formed. For example, the colored thermoplastic resin layer 2 is formed to be 50 um thick using polybutylene terephthalate resin (PBT) (FIG. 2A). Next, the gloss matte-expressing pattern part 3 and the non-gloss matte-expressing pattern part 5a are formed to create the pictorial pattern layer 5. For example, a urethane-based, carbon black-including black ink is used to form the gloss matte-expressing pattern part 3 at a position in the pattern in the pictorial pattern of the pictorial pattern layer 5 synchronizing with the embossed part 7a, and the non-gloss matte-expressing pattern part 5a is formed in the other region.

Next, for example, polypropylene (PP) having a thickness of 38 um is deposited on the pictorial pattern layer 5 as the transparent thermoplastic resin layer 6 and then the surface protective layer 7 is deposited on the transparent thermoplastic resin layer 6 (FIG. 2B).

The multi-layer body formed of these layers is irradiated with infrared light (irradiation light) from the surface protective layer 7 side (FIG. 2C) and, immediately after performing the infrared light irradiation, an embossing plate such as an embossing roll is pressed onto the surface of the surface protective layer 7 (FIG. 2D).

Since the gloss matte-expressing pattern part 3 is formed from black ink having infrared light-absorbing properties, when the multi-layer body is irradiated with infrared light, the surface protective layer 7 and the transparent thermoplastic resin layer 6 are easily softened in the portion of the surface protective layer 7 that overlaps the gloss matte-expressing pattern part 3 in a plan view, in comparison with the portion that overlaps the non-gloss matte-expressing pattern part 5a. In other words, after infrared light irradiation, the surface protective layer 7 and the transparent thermoplastic resin layer 6 have portions that easily soften and portions that do not easily soften. Therefore, when an embossing plate is pressed onto the surface protective layer 7 in this state, unevenness is easily formed in the softened portions and unevenness is not easily formed in portions that do not easily soften, thus, unevenness is easily formed in the softened portions, that is, the portions that overlap the gloss matte-expressing pattern part 3 in a plan view. Therefore, the embossed part 7a formed of an uneven shape synchronizing with the gloss matte-expressing pattern part 3 is easily formed only in a position on the surface protective layer 7 that overlaps the gloss matte-expressing pattern part 3 in a plan view.

Next, the primer layer 8 is formed on the surface of the colored thermoplastic resin layer 2 opposite to the surface on which the pictorial pattern layer 5 is formed (FIG. 2E). Due to this, the decorative sheet 1 illustrated in FIG. 1 is formed.

The timing for pressing an embossing plate on the surface protective layer 7 after performing infrared light irradiation is not limited to immediately after performing the infrared light irradiation, but may be any timing that allows selective formation of uneven shapes in the portions softened by infrared light irradiation by pressing on the surface of the surface protective layer 7.

In addition, other steps may be included between the step for creating the surface protective layer 7 and the step for performing infrared light irradiation, in short, infrared light irradiation may be performed in a state where the surface protective layer 7 is formed.

### [Effects of first embodiment]

(1) According to the production method for the decorative sheet 1 according to the present embodiment, after infrared light irradiation is performed on the entire surface protective layer 7, an embossing plate is pressed onto the surface protective layer 7, making it possible to perform embossing processing on the portion of the surface protective layer 7 that overlaps the gloss matte-expressing pattern part 3 in a plan view. In other words, it is possible to easily form the embossed part only at the desired position without performing high precision positioning or the like in the region of the surface protective layer 7 where the embossing plate is pressed. As a result, it is possible to easily obtain a decorative sheet having excellent design properties.
(2) In addition, since the gloss matte-expressing pattern part 3 is provided to synchronize with the pictorial pattern of the pictorial pattern layer 5, it is possible to form the embossed part 7a at a position synchronizing with the pictorial pattern of the pictorial pattern layer 5, that is, it is possible to easily express the gloss matte effect at a position synchronizing with the pictorial pattern.

In addition, the transparent thermoplastic resin layer 6 and the surface protective layer 7 are deposited on the gloss matte-expressing pattern part 3 using black ink having infrared light-absorbing properties and the pictorial pattern layer 5 on which the pictorial pattern is formed using a material having lower light absorption properties with respect to infrared light than the gloss matte-expressing pattern part 3 and, furthermore, the embossed part 7a is formed on the surface protective layer 7 at a position that overlaps the gloss matte-expressing pattern part 3 in a plan view, thus, it is possible to visually recognize the gloss matte-expressing pattern part 3 using black ink as part of the pictorial pattern.

(3) In addition, by providing unevenness on the surface protective layer 7 itself, the gloss matte expression is achieved and it is thus possible to suppress the occurrence of the pattern peeling of the gloss matte or the like. Therefore, for example, it is possible to achieve synchronized gloss matte expression even in flooring materials or the like.

### [Modified example]

In the above-described embodiment, a description was given of a case where a material including black ink is used as the gloss matte-expressing pattern part 3 and infrared light irradiation is performed to partially soften the surface protective layer 7, but the present invention is not limited thereto. The surface protective layer 7 may be partially softened by using a material including any ink formed of a component that has light absorption properties with respect to light of a predetermined wavelength, and a light source that irradiates the light of a predetermined wavelength.

### [Second embodiment]

Next, a description will be given of a second embodiment of the present invention.

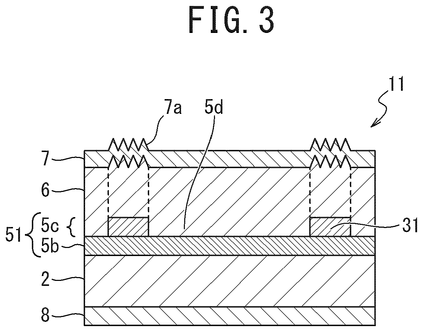

In the first embodiment, a description was given of a case where the gloss matte-expressing pattern part 3 is part of the pictorial pattern layer 5 and the gloss matte-expressing pattern part 3 and the non-gloss matte-expressing pattern part 5a form a single pictorial pattern in the provided pictorial pattern layer 5; however, in the second embodiment, as illustrated in FIG. 3, a gloss matte-expressing pattern part 31 is provided on a main pictorial pattern layer 5b. In other words, the pictorial pattern layer 51 according to the second embodiment is provided with the main pictorial pattern layer 5b and a pattern layer 5c deposited on the main pictorial pattern layer 5b. The pattern layer 5c is formed only of the gloss matte-expressing pattern part 31 arranged to synchronize with the embossed part 7a. The pictorial pattern of the pictorial pattern layer 51 is formed mainly by the main pictorial pattern layer 5b and the pattern layer 5c, that is, the gloss matte-expressing pattern part 31, is formed of a material that allows the main pictorial pattern layer 5b to be visually recognized. Specifically, the gloss matte-expressing pattern part 31 is different from the gloss matte-expressing pattern part 3 in the first embodiment described above in being formed of a material having an infrared light-absorbing action, not a material including black ink, and formed using an ink that is colorless and transparent or a light-color close to transparent. As the material having an infrared light-absorbing action, it is possible to use inorganic materials such as tin-doped indium oxide (ITO), antimony-doped tin oxide (ATO), lanthanum hexaboride (LaB6), and cesium-doped tungsten oxide, near-infrared absorbing materials and infrared absorbing materials, organic materials such as phthalocyanine-based materials, and other existing materials having an infrared light-absorbing action. That is, the gloss matte-expressing pattern part 31 is formed using an ink that allows the main pictorial pattern layer 5b to be visually recognized.

A decorative sheet 11 according to the second embodiment is formed by depositing the main pictorial pattern layer 5b on the colored thermoplastic resin layer 2, forming the gloss matte-expressing pattern part 31 as the pattern layer 5c on the main pictorial pattern layer 5b, and depositing the transparent thermoplastic resin layer 6 on the pattern layer 5c. In other words, the transparent thermoplastic resin layer 6 is deposited on the main pictorial pattern layer 5b and the gloss matte-expressing pattern part 31 to fill gaps in, and to cover the upper surface of, the gloss matte-expressing pattern part 3.

Furthermore, after depositing the surface protective layer 7 on the transparent thermoplastic resin layer 6, the multi-layer body formed of these layers is irradiated with infrared light. When the infrared light irradiation is performed, the portion of the surface protective layer 7 that overlaps the gloss matte-expressing pattern part 31 in a plan view is relatively softened, while the portion that overlaps the portion where the gloss matte-expressing pattern part 31 is not formed is relatively difficult to soften. As a result, by pressing an embossing plate onto the surface protective layer 7 after the infrared light irradiation is performed, the embossed part 7a is formed in the portion that overlaps the gloss matte-expressing pattern part 31 in a plan view, which is relatively easily softened. In this manner, even when the gloss matte-expressing pattern part 31 is deposited on the main pictorial pattern layer 5b, it is possible to obtain the same action and effect as the first embodiment described above.

In addition, since the gloss matte-expressing pattern part 31 is formed using a material that is colorless and transparent or a light color close to transparent, even when the gloss matte-expressing pattern part 31 is deposited on the main pictorial pattern layer 5b, it is possible to visually recognize the pictorial pattern of the main pictorial pattern layer 5b through the gloss matte-expressing pattern part 3.

In the case of FIG. 3, since the gloss matte-expressing pattern part 31 is deposited on the main pictorial pattern layer 5b, as the pictorial pattern of the pictorial pattern layer 51, it is possible to carry out selection without considering the arrangement position of the gloss matte-expressing pattern part 31 or the like. Furthermore, since the gloss matte-expressing pattern part 31 does not interfere with the visibility of the main pictorial pattern layer 5b, it is possible to easily express the gloss matte effect without decreasing the visibility of the pictorial pattern of the pictorial pattern layer 51.

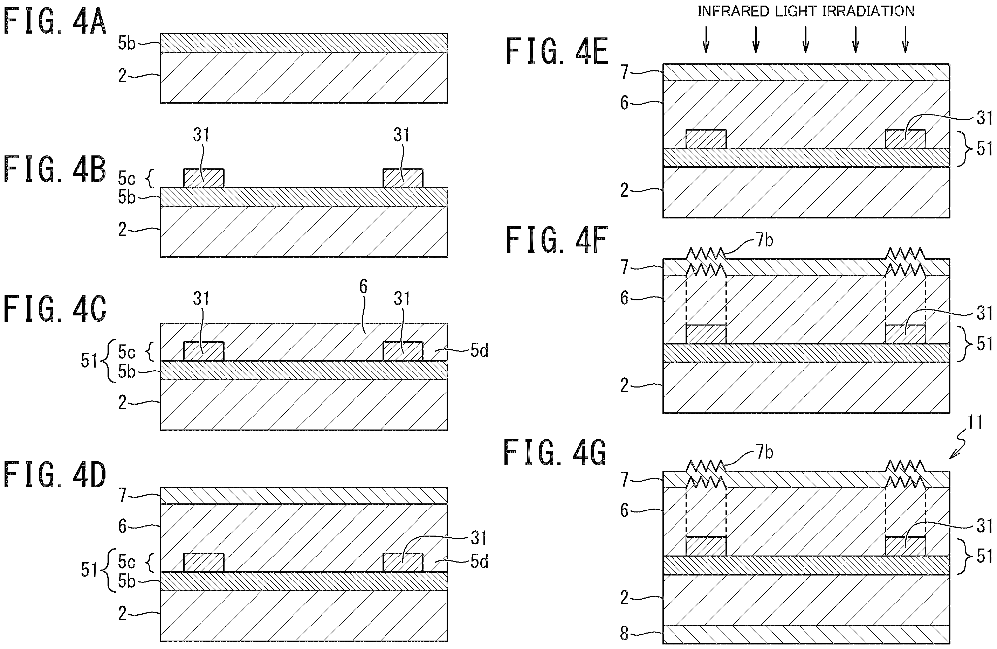

FIGS. 4A to 4G illustrate an example of a production procedure for the decorative sheet 11 created by forming the gloss matte-expressing pattern part 3 on the main pictorial pattern layer 5b. As illustrated in FIGS. 4A to 4G, the main pictorial pattern layer 5b having a predetermined pictorial pattern is formed (FIG. 4A), the gloss matte-expressing pattern parts 31 are formed thereon at positions corresponding to a predetermined pattern in the pictorial pattern of the main pictorial pattern layer 5b, and the pattern layer 5c is formed (FIG. 4B). Subsequently, the transparent thermoplastic resin layer 6 is deposited on the main pictorial pattern layer 5b including the gloss matte-expressing pattern parts 31 (FIG. 4C). After depositing the surface protective layer 7 on the transparent thermoplastic resin layer 6 (FIG. 4D), infrared light irradiation is performed (FIG. 4E) and an embossing plate is pressed onto the surface protective layer 7 (FIG. 4F). As a result, it is possible to create the embossed part 7a synchronizing with the gloss matte-expressing pattern part 31 and the decorative sheet 11 is created by providing the primer layer 8 (FIG. 4G). As a result, it is possible to create the embossed part 7a synchronizing with the gloss matte-expressing pattern part 31 and the decorative sheet 11 is created by providing the primer layer 8 (FIG. 4G).

### [Third embodiment]

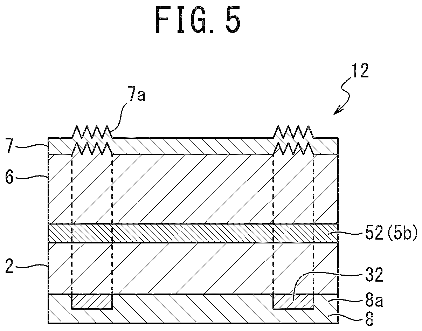

In the above-described second embodiment, a description was given of a case where the gloss matte-expressing pattern part 31 is provided on the main pictorial pattern layer 5b; however, in a decorative sheet 12 according to the third embodiment, as illustrated in FIG. 5, a gloss matte-expressing pattern part 32 is provided on the surface of the colored thermoplastic resin layer 2 on the opposite side to the main pictorial pattern layer 5b. In other words, a pictorial pattern layer 52 according to the third embodiment is formed only of the main pictorial pattern layer 5b. The same reference numerals are given to the same parts as in the first and second embodiments, for which detailed explanations will not be repeated.

### [Pattern layer]

A pattern layer 8a is formed only of the gloss matte-expressing pattern part 32, which is arranged to synchronize with the embossed part 7a. In the same manner as the gloss matte-expressing pattern part 3 according to the above first embodiment, the gloss matte-expressing pattern part 32 is formed of a material that has light absorption properties with respect to light of a predetermined wavelength, for example, a material that has an infrared light-absorbing action. Specifically, the gloss matte-expressing pattern part 32 is formed of a material including a carbon black-including black ink, for example, formed of a urethane-based printing ink. The gloss matte-expressing pattern part 32 is arranged at a position that synchronizes with the pictorial pattern of the main pictorial pattern layer 5b. For example, when the main pictorial pattern layer 5b has a wood grain design, the gloss matte-expressing pattern part 32 is formed at a position that overlaps the wood grain board grooves of the main pictorial pattern layer 5b in a plan view.

The thickness of the gloss matte-expressing pattern part 32 may be a thickness that makes it possible to soften the transparent thermoplastic resin layer 6 and the surface protective layer 7 to an extent that an uneven shape is able to be sufficiently formed in the surface protective layer 7 during the embossing processing described below. In addition, to obtain a sufficient gloss matte effect, the difference in the degree of luster between the part where the gloss matte-expressing pattern part 32 is formed and the part where the gloss matte-expressing pattern part 32 is not formed is preferably 5 or more, that is, the image density level is preferably 60% or more.

### [Light of predetermined wavelength]

As described above, the gloss matte-expressing pattern part 32 is formed of a material that has light absorption properties with respect to light of a predetermined wavelength. Examples of the light of a predetermined wavelength include infrared light, ultraviolet light, visible light, electron beams, X-rays, ion beams, and the like.

### [Production method for decorative sheet]

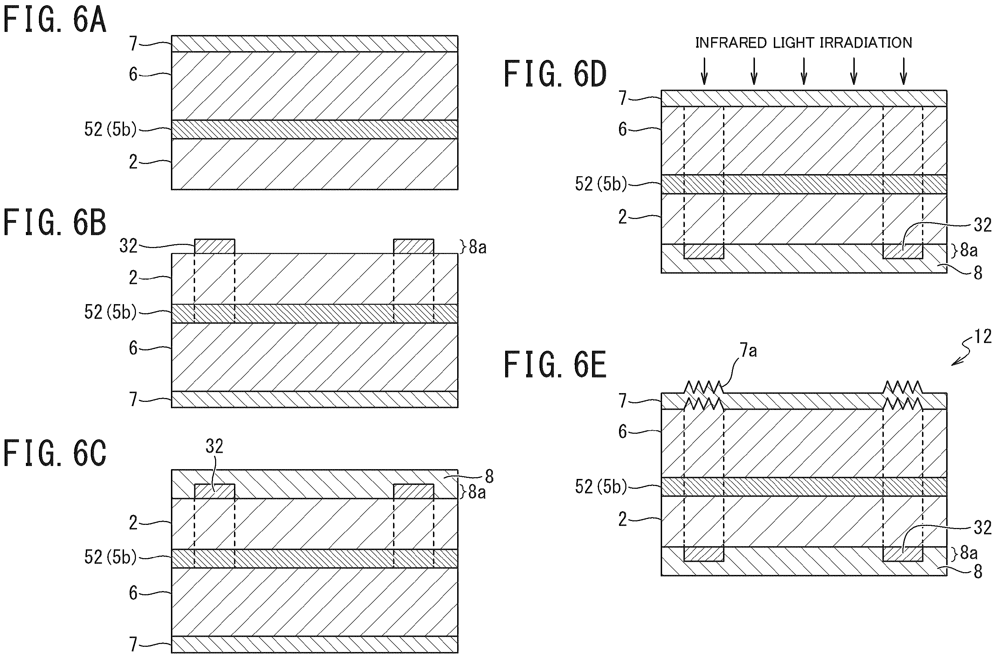

Next, a description will be given of an example of a production method of the decorative sheet 12 according to the third embodiment with reference to FIGS. 6A to 6E.

First, the colored thermoplastic resin layer 2 is formed (FIG. 6A). Next, the main pictorial pattern layer 5b is printed on the colored thermoplastic resin layer 2 using, for example, a urethane-based printing ink, and the transparent thermoplastic resin layer 6 is deposited on the main pictorial pattern layer 5b. Then, the surface protective layer 7 is deposited on the transparent thermoplastic resin layer 6.

Next, the gloss matte-expressing pattern part 32 is formed on the surface of the colored thermoplastic resin layer 2 on the opposite side to the main pictorial pattern layer 5b, and the pattern layer 8a is formed (FIG. 6B).

Next, the primer layer 8 formed of, for example, a polyester-based resin is deposited on the colored thermoplastic resin layer 2 including the gloss matte-expressing pattern part 32, to fill gaps in, and cover the upper surface of, the gloss matte-expressing pattern part 32 (FIG. 6C).

Then, the entire multi-layer body in which each of these layers are deposited is irradiated with infrared light (irradiation light) from the side of the surface protective layer 7 (FIG. 6D) and, immediately after performing the infrared light irradiation, an embossing plate such as an embossing roll is pressed onto the surface of the surface protective layer 7 (FIG. 6E). Due to this, the embossed part 7a is formed and the decorative sheet 12 is formed.

Here, the gloss matte-expressing pattern part 32 is formed of black ink having infrared light-absorbing properties. Therefore, when the multi-layer body is irradiated with infrared light, the transparent thermoplastic resin layer 6 and the surface protective layer 7 more easily soften in the portion of the surface protective layer 7 that overlaps the gloss matte-expressing pattern part 32 in a plan view than in the portion that does not overlap the gloss matte-expressing pattern part 32. In other words, after the infrared light irradiation is performed, the transparent thermoplastic resin layer 6 and the surface protective layer 7 have portions that easily soften and portions that do not easily soften. Therefore, when an embossing plate is pressed onto the transparent thermoplastic resin layer 6 and the surface protective layer 7 in this state, unevenness is easily formed in the softened portion and unevenness is not easily formed in the not easily softened portion. Therefore, unevenness is easily formed in the softened portion of the transparent thermoplastic resin layer 6 and the surface protective layer 7, that is, the portion that overlaps the gloss matte-expressing pattern part 32 in a plan view. Therefore, the embossed part 7a, which is formed with an uneven shape that synchronizes with the gloss matte-expressing pattern part 32, is easily formed only at the positions of the transparent thermoplastic resin layer 6 and the surface protective layer 7 that overlap the gloss matte-expressing pattern part 32 in a plan view.

Due to this, it is possible to form the embossed part 7a at a position synchronizing with the main pictorial pattern layer 5b, that is, it is possible to easily create the embossed part 7a synchronized with the main pictorial pattern layer 5b without performing a highly precise positioning operation.

The timing of pressing the embossing plate on the transparent thermoplastic resin layer 6 and the surface protective layer 7 after performing infrared light irradiation is not limited to immediately after performing the infrared light irradiation, but may be any timing that allows selective formation of uneven shapes in the portions softened by infrared light irradiation by pressing the embossing plate onto the surfaces of the transparent thermoplastic resin layer 6 and the surface protective layer 7.

In addition, another step may be included between the step for creating the surface protective layer 7 and the step for performing infrared light irradiation, in short, the infrared light irradiation may be performed in a state where the transparent thermoplastic resin layer 6 and the surface protective layer 7 are formed.

### [Effects of third embodiment]

In the decorative sheet 12 according to the third embodiment, it is possible to easily form an embossed part at a desired position and to obtain the same action and effects as the first and second embodiments described above.

In addition, the decorative sheet 12 according to the third embodiment is provided with the gloss matte-expressing pattern part 32 on the underlayer of the colored thermoplastic resin layer 2, thus, the visibility of the gloss matte-expressing pattern part 32 is low when the decorative sheet 12 is viewed from the surface protective layer 7 side. As a result, although a high-concentration black ink having infrared light-absorbing properties is used as the gloss matte-expressing pattern part 32, it is possible to suppress visual recognition of the gloss matte-expressing pattern part 32 when the decorative sheet 12 is viewed from the surface protective layer 7 side. For this reason, even if a dark color pattern is not used as the main pictorial pattern layer 5b, it is possible to suppress visual recognition of the gloss matte-expressing pattern part 32 including black ink and, as a result, it is also possible to adopt a light color pattern as the main pictorial pattern layer 5b and, by providing the gloss matte-expressing pattern part 32, suppress the constraints on pattern expression due to the main pictorial pattern layer 5b.

In addition, the colored thermoplastic resin layer 2 and the main pictorial pattern layer 5b as well as the transparent thermoplastic resin layer 6 and the surface protective layer 7 are deposited on a pattern layer 5d formed of the gloss matte-expressing pattern part 32 using a high-concentration black ink having infrared light-absorbing properties and the embossed part 7a is formed at a position on the surface protective layer 7 that overlaps the gloss matte-expressing pattern part 32 in a plan view. Therefore, it is possible to reduce the visibility of the gloss matte-expressing pattern part 32 using black ink and to suppress the influence of the gloss matte-expressing pattern part 32, which is useful in the production process of the decorative sheet 12, on the appearance of the decorative sheet 12. As a result, it is possible to obtain the decorative sheet 12 having good design properties in which the pictorial pattern of the main pictorial pattern layer 5b and the embossed part 7a are synchronized.

### Examples

### (Example 1)

A multi-layer body was created which was formed of the colored thermoplastic resin layer 2 formed of a 50 um thick PBT layer, the pictorial pattern layer 5 formed of the gloss matte-expressing pattern part 3 pattern-printed with black ink formed of a urethane-based printing ink and the non-gloss matte-expressing pattern part 5a formed adjacent thereto using urethane-based printing ink, the transparent thermoplastic resin layer 6 formed of a 38 um thick PP layer, and the surface protective layer 7 in which an acrylic-based resin composition is the main component.

The transparent thermoplastic resin layer 6 was formed by being laminated onto the pictorial pattern layer 5 and, after forming the surface protective layer 7, the multi-layer body was heated using an infrared heater, the embossed part 7a was then formed by pressing an embossing roll onto the surface protective layer 7, and the primer layer 8 was also formed, thereby obtaining the decorative sheet 1 illustrated in FIG. 1.

### (Example 2)

A multi-layer body was created which was formed of the colored thermoplastic resin layer 2 formed of a 50 um thick PBT layer, the main pictorial pattern layer 5b formed using a urethane-based ink, the gloss matte-expressing pattern part 31 pattern-printed with a transparent ink formed of a urethane-based printing ink including an infrared light-absorbing material, the transparent thermoplastic resin layer 6 formed of a 38 um thick PP layer, and the surface protective layer 7 in which an acrylic-based resin composition is the main component. The transparent thermoplastic resin layer 6 was formed by being laminated on the main pictorial pattern layer 5b and, after the surface protective layer 7 was formed, the multi-layer body was heated using an infrared heater, the embossed part 7a was then formed by pressing an embossing roll onto the surface protective layer 7, and the primer layer 8 was also formed, thereby obtaining the decorative sheet 11 illustrated in FIG. 3.

### (Example 3)

A multi-layer body was created by depositing, in this order, the main pictorial pattern layer 5b formed of urethane-based printing ink, the transparent thermoplastic resin layer 6 formed of a 38 um thick PP layer, and the surface protective layer 7 in which an acrylic-based resin composition is the main component, on one surface of the colored thermoplastic resin layer 2 formed of a 50 um thick PBT layer. The transparent thermoplastic resin layer 6 was formed by being laminated on the main pictorial pattern layer 5b.

In addition, the other surface of the colored thermoplastic resin layer 2 was pattern-printed with black ink formed of urethane-based printing ink to form the gloss matte-expressing pattern part 32, the primer layer 8 was formed on the colored thermoplastic resin layer 2 including the gloss matte-expressing pattern part 32, and a multi-layer body was obtained.

After forming the primer layer 8, the multi-layer body was heated using an infrared heater and the embossed part 7a was then formed by pressing an embossing roll pressed onto the surface protective layer 7, thereby obtaining the decorative sheet 12 illustrated in FIG. 5.

### (Comparative Example 1)

As the base material, a sheet formed only of an base material was obtained by creating the colored thermoplastic resin layer 2 formed of a 50 um thick PBT layer.

Furthermore, the decorative sheets 11 illustrated in Examples 4 to 9 were obtained as Examples corresponding to variations of Example 2.

### (Example 4)

The decorative sheet 11 illustrated in FIG. 3 was obtained in the same manner as in Example 2 above, except that the gloss matte-expressing pattern part 31 was formed using lanthanum hexaboride (LaB6) as the infrared light-absorbing material.

### (Example 5)

The decorative sheet 11 illustrated in FIG. 3 was obtained in the same manner as in Example 2 above, except that the gloss matte-expressing pattern part 31 was formed using a transparent ink formed of a urethane-based printing ink using cesium-doped tungsten oxide (CWO, manufactured by Sumitomo Metal Mining Co., Ltd.) as the infrared light-absorbing material.

### (Example 6)

The decorative sheet 11 illustrated in FIG. 3 was obtained in the same manner as in Example 2 above, except that the gloss matte-expressing pattern part 31 was formed using a transparent ink formed of a urethane-based printing ink using antimony-doped tin oxide (ATO) as the infrared light-absorbing material.

### (Example 7)

The decorative sheet 11 illustrated in FIG. 3 was obtained in the same manner as in Example 2 above, except that the gloss matte-expressing pattern part 31 was formed using a transparent ink formed of a urethane-based printing ink using tin-doped indium oxide (ITO) as the infrared light-absorbing material.

### (Example 8)

The decorative sheet 11 illustrated in FIG. 3 was obtained in the same manner as in Example 2 above, except that the gloss matte-expressing pattern part 31 was formed using a transparent ink formed of a urethane-based printing ink using the near-infrared absorbing material OPTLION (manufactured by Toyo Visual Solutions Co., Ltd.) as the infrared light-absorbing material.

### (Example 9)

The decorative sheet 11 illustrated in FIG. 3 was obtained in the same manner as in Example 2 above, except that the gloss matte-expressing pattern part 31 was formed using a transparent ink formed of a urethane-based printing ink using the infrared absorbing material EXCOLOR Series (manufactured by Nippon Shokubai Co., Ltd.) as the infrared light-absorbing material.

### [Evaluation]

The infrared light transmittance was measured for each of the decorative sheets of Examples 1 to 9 and the base material of Comparative Example 1. The infrared light transmittance was measured by the method described below.

The color difference, degree of luster, and difference in the degree of luster were acquired for each of the decorative sheets of Examples 1 to 9 and the base material of Comparative Example 1. As the acquisition method, the method described below was used. The acquired results are shown in Table 1 and Table 2.

### [Infrared light transmittance measurement]

The infrared light transmittance was measured for each of the decorative sheets of Examples 1 to 9 having different image density levels and the base material of Comparative Example 1. Specifically, the infrared light transmittance was measured at a wavelength of 2000 nm using a UV-visible spectrophotometer UV3600 manufactured by Shimadzu.

### [Color difference measurement]

The color difference was measured for the decorative sheets of Examples 1 to 9 and the base material of Comparative Example 1 based on the infrared light transmittance measurement results. Specifically, the color difference ΔE with respect to a standard plate was calculated using a color difference meter CR-400 manufactured by Konica Minolta Japan, Inc.

### [Degree of luster measurement]

For the decorative sheets of Examples 1 to 9, specular luster measurement was performed at an incidence angle of 85° on the surface protective layer 7 after embossing processing was carried out, using a micro-TRI-gloss manufactured by BYK Corporation. Specular luster measurement was performed on the base material of Comparative Example 1 using the same procedure.

### [Difference in degree of luster]

The difference was calculated between the degree of luster of each of the decorative sheets of Examples 1 to 9 and the degree of luster of the base material of Comparative Example 1, as measured by the degree of luster measurement. The presence or absence of gloss matte expression was confirmed by the difference in the degree of luster.

**[Table 1]**

| | Ex. 1 | Ex. 2 | Ex. 3 | Comp. Ex. 1 |
|---|---|---|---|---|
| Color difference (ΔE) *1 | 63.4 | 12.06 | 12.06 | 4.5 |
| Infrared transmittance (%) *2 | 24.48 | 25.254 | 25.254 | 61.67 |
| Degree of luster | 3.8 | 3.3 | 3.3 | 8.7 |
| Difference in degree of luster *3 | 4.9 | 5.4 | 5.4 | |

| | | | | |
|---|---|---|---|---|
| *1 Color difference with respect to standard plate *2 Transmittance at a wavelength of 2000 nm *3 Difference in degree of luster between base material (portion with no ink) and ink portion | | | | |

**[Table 2]**

| | Ex. 4 | Ex. 5 | Ex. 6 | Ex. 7 | Ex. 8 | Ex. 9 |
|---|---|---|---|---|---|---|
| Color difference (ΔE) *1 | 12.06 | 12.06 | 12.06 | 12.06 | 12.06 | 12.06 |
| Infrared transmittance (%) *2 | 25.254 | 25.254 | 25.254 | 25.254 | 25.254 | 25.254 |
| Degree of luster | 3.3 | 3.3 | 3.3 | 3.3 | 3.3 | 3.3 |
| Difference in degree of luster *3 | 5.4 | 5.4 | 5.4 | 5.4 | 5.4 | 5.4 |

| | | | | | | |
|---|---|---|---|---|---|---|
| *1 Color difference with respect to standard plate *2 Transmittance at a wavelength of 2000 nm *3 Difference in degree of luster between base material (portion with no ink) and ink portion | | | | | | |

### [Results]

In all the Examples of Examples 1 to 9, although there was a slight difference in the degree of luster, the difference in the degree of luster from the base material was approximately 5, that is, the decorative sheet on which the embossed part 7a was formed had a difference in the degree of luster of approximately 5 in all of the Examples, which satisfies the difference in the degree of luster of 3 that is generally able to be confirmed, thus confirming that the gloss matte expression was obtained. In addition, in Examples 2 to 9, the color difference from the standard plate was kept low, thus, it was clear that it was possible to suppress visual recognition of the gloss matte-expressing pattern part.

### Reference Signs List

- 1, 11, 12: decorative sheet
- 2: colored thermoplastic resin layer
- 3, 31, 32: gloss matte-expressing pattern part
- 4: concealing solid layer
- 5, 51, 52: pictorial pattern layer
- 5a: non-gloss matte-expressing pattern part
- 5b: main pictorial pattern layer
- 5c: pattern layer
- 6: transparent thermoplastic resin layer
- 7: surface protective layer
- 7a: embossed part
- 8: primer layer
- 8a: pattern layer

## Claims

1. A production method for a decorative sheet including a base material layer, a pictorial pattern layer, a transparent resin layer, and a surface protective layer, and having an embossed shape synchronizing with a pictorial pattern of the pictorial pattern layer, the production method comprising:
forming the pictorial pattern layer on which the pictorial pattern is drawn using a predetermined material having higher light absorption properties with respect to light of a predetermined wavelength than the transparent resin layer;
depositing the transparent resin layer and the surface protective layer on the pictorial pattern layer in this order;
performing irradiation with irradiation light for which a power of the light of a predetermined wavelength is higher than a power of light of other wavelengths after the depositing; and
pressing an embossing plate for forming the embossed shape onto the surface protective layer after performing the irradiation with irradiation light.

2. The production method for a decorative sheet according to claim 1,
wherein the pictorial pattern layer is a single layer including a gloss matte-expressing pattern part formed of a predetermined material having light absorption properties with respect to the light of a predetermined wavelength and a non-gloss matte-expressing pattern part.

3. The production method for a decorative sheet according to claim 2,
wherein the gloss matte-expressing pattern part is formed to include an ink including a material that absorbs infrared light, and the irradiation light is infrared light.

4. The production method for a decorative sheet according to claim 1,
wherein the pictorial pattern layer includes a main pictorial pattern layer having the pictorial pattern, and a pattern layer deposited on the main pictorial pattern layer, formed by using a predetermined material having higher light absorption properties with respect to light of a predetermined wavelength than the transparent resin layer, and synchronizing with the pictorial pattern.

5. A production method for a decorative sheet having an embossed shape synchronizing with a pictorial pattern, the production method comprising:
depositing a pictorial pattern layer, a transparent resin layer, and a surface protective layer in this order on one surface of a colored resin layer;
forming, on the other surface of the colored resin layer, a pattern layer synchronizing with the pictorial pattern using a predetermined material having higher light absorption properties with respect to light of a predetermined wavelength than the colored resin layer;
performing irradiation with irradiation light for which a power of the light of a predetermined wavelength is higher than a power of light of other wavelengths after the depositing and the pattern layer forming; and
pressing an embossing plate for forming the embossed shape onto the surface protective layer after performing the irradiation with irradiation light.

6. A decorative sheet comprising:
a base material layer;
a pictorial pattern layer;
a transparent resin layer; and
a surface protective layer,
wherein the pictorial pattern layer has a pictorial pattern formed by using a predetermined material having higher light absorption properties with respect to light of a predetermined wavelength than the transparent resin layer,
the transparent resin layer and the surface protective layer are deposited on the pictorial pattern layer in this order, and
an embossed part is formed at a position on the surface protective layer that overlaps a portion formed of the predetermined material in a plan view.

7. A decorative sheet comprising:
a pictorial pattern layer,
wherein the pictorial pattern layer, a transparent resin layer, and a surface protective layer are deposited on one surface of a colored resin layer in this order,
a pattern layer, in which a predetermined material having higher light absorption properties with respect to light of a predetermined wavelength than the colored resin layer is arranged to synchronize with a pictorial pattern of the pictorial pattern layer, is deposited on the other surface of the colored resin layer, and
an embossed part is formed at a position on the surface protective layer that overlaps a portion formed of the predetermined material in a plan view.
